# EUROPEAN PATENT APPLICATION

(11) **EP 4 571 951 A1**
(43) Date of publication of application: **18.06.2025**
(21) Application number: 24206954.0
(22) Date of filing: 16.10.2024
(51) Int. Cl.: H01M 50/103, H01M 50/15, H01M 50/342

(54) **SECONDARY BATTERY WITH SIDE INSULATOR**

(30) Priority: 13.12.2023 KR 20230181090
(71) Applicant: SK On Co., Ltd., Seoul 03161 (KR)
(72) Inventor: KIM, Suk Chan, 34124 Daejeon (KR); PARK, Soo Min, 34124 Daejeon (KR); PAIK, Hyung Ju, 34124 Daejeon (KR); JEON, Hae Ryong, 34124 Daejeon (KR); HEO, Won Tae, 34124 Daejeon (KR); PARK, Soo In, 05781 Seoul (KR)
(74) Representative: Stolmár & Partner Patentanwälte PartG mbB

(57) **Abstract**

A secondary battery is provided. The secondary battery includes a case accommodating an electrode assembly therein, a cap plate including a vent and sealing an opening of the case, and a side insulator disposed on a lower portion of the cap plate. The side insulator includes a vent cover portion including a main chamber and disposed below the vent, and an assembly bracket on which the vent cover portion is disposed.

## Description

### TECHNICAL FIELD

The disclosure and implementations disclosed in this patent document generally relate to a secondary battery.

### BACKGROUND

Secondary batteries are a type of energy storage device that may charge and discharge electricity. Secondary batteries are widely used in various devices using electricity as a power source. For example, secondary batteries are used as energy storage devices in various devices ranging from small devices such as mobile phones, laptops, and tablets to large devices such as vehicles and aircraft. In detail, secondary batteries have been actively sought for use as a vehicle power source recently.

Secondary batteries may be classified into lead-acid batteries, nickel-cadmium batteries, nickel-hydrogen batteries, lithium-ion batteries and the like depending on the material of the electrode or the like. Each type of secondary battery may be appropriately selected depending on design capacity, usage environment, or the like. Lithium-ion batteries may implement relatively high voltage and capacity compared to other types of secondary batteries. Accordingly, lithium-ion batteries are widely used in fields that require high-density energy storage devices such as vehicle battery packs.

Secondary batteries such as lithium-ion batteries mainly include positive electrode materials, negative electrode materials, separators, electrolytes, and the like. The positive and negative electrode materials are disposed with an insulating separator therebetween, and may be charged or discharged by the movement of ions through the electrolyte.

Meanwhile, secondary batteries may generate excessive heat or decompose the electrolyte due to overcharging, insertion of foreign substances, or damage to the insulating structure caused by external impact, which may cause internal pressure to increase and result in ignition or explosion. Accordingly, some secondary batteries are equipped with a vent to discharge excessive internal pressure, and the like. The vent according to the related art is ruptured according to the internal pressure, thereby contributing to relieving internal heat, pressure, and the like. However, the vent as described above may react to temporary pressure changes in some situations or may be damaged by high-temperature by-products generated inside the secondary battery, causing malfunctions.

The above description is provided to help understand the technical background of the present disclosure, and should not be interpreted as reducing, limiting, or restricting the technical idea of the present disclosure. In addition, the contents described or suggested in the above description do not necessarily mean prior art, and some may include contents that do not correspond to prior art.

### SUMMARY

The present disclosure may be implemented in some embodiments to provide a secondary battery.

According to an aspect of the present disclosure, a secondary battery in which a vent may be appropriately protected from temporary pressure changes inside a case, high-temperature byproducts, or the like may be provided.

However, the technical problems to be achieved by the embodiments are not necessarily limited to the technical problems mentioned above. Other technical problems not mentioned herein may be clearly understood by a person having ordinary knowledge in the technical field to which the present disclosure belongs from other descriptions of the specification, such as the detailed description.

A secondary battery in the present disclosure may be widely applied in green technology fields such as electric vehicles, battery charging stations, and solar power generation and wind power generation using batteries. In addition, the secondary battery in the present disclosure may be used in eco-friendly electric vehicles, hybrid vehicles, and the like to prevent climate change by suppressing air pollution and greenhouse gas emissions.

In some embodiments, a secondary battery includes a case accommodating an electrode assembly therein; a cap plate including a vent and sealing an opening of the case; and a side insulator disposed on a lower portion of the cap plate. The side insulator includes a vent cover portion including a main chamber and disposed below the vent; and an assembly bracket on which the vent cover portion is disposed.

The vent cover portion may include a lower surface partitioning a lower region of the main chamber, and the lower surface may be formed as a closed surface and limits pressure inside of the case from directly acting on the main chamber through the lower surface.

The vent cover portion may include a first side and a second side partitioning left and right regions of the main chamber, and the first and second sides may include first and second inflow holes transferring pressure inside of the case to the main chamber, respectively.

The vent cover portion may include an upper surface partitioning an upper region of the main chamber, and the upper surface may include a penetrating exhaust hole toward the vent.

The vent cover portion may include an upper surface including an exhaust hole penetrating toward the vent and partitioning an upper region of the main chamber, and a sealing flange protruding from the upper surface toward the cap plate by a predetermined height and extending along an edge of the upper surface to include the exhaust hole of the vent cover portion thereinside.

The vent cover portion may include a first buffer chamber partitioned from the main chamber by a first internal partition.

The first buffer chamber may be divided into a space that is smaller than the main chamber by a predetermined amount.

The first buffer chamber may be connected to an interior of the case through a first inflow hole provided in a first side of the vent cover portion, and may be connected to the main chamber through a first buffer hole provided in the first internal partition.

The first buffer hole may be configured to have an opening area smaller than an opening area of the first inflow hole by a predetermined amount.

The first buffer chamber may include an upper surface formed as a closed surface, and the main chamber may include an exhaust hole penetrating through an upper surface toward the vent.

The first inflow hole may include a first flap extending by a predetermined length from a side edge portion of the first inflow hole toward the main chamber, and the first flap may be configured to extend obliquely toward a center of the first inflow hole.

The vent cover portion may include a second buffer chamber partitioned from the main chamber by a second internal partition and disposed to correspond to the first buffer chamber with the main chamber interposed therebetween.

The side insulator may be divided into a first side insulator including a portion of the vent cover portion, and a second side insulator including a remaining portion of the vent cover portion.

The assembly bracket may be configured to extend in a longitudinal direction in such a manner that the vent cover portion is disposed at the center in the longitudinal direction.

The assembly bracket may include a first bending portion including a first coupling portion and provided on one end in the longitudinal direction; a second bending portion including a second coupling portion and provided on an end corresponding and opposite to the one end; a first assembly rib provided in one-side region of the assembly bracket centered on the vent cover portion, extending by a predetermined length in the longitudinal direction, and coupled to the cap plate; and a second assembly rib provided in a region opposite to the one-side region, extending by a predetermined length in the longitudinal direction, and coupled to the cap plate.

### BRIEF DESCRIPTION OF DRAWINGS

Certain aspects, features, and advantages of the present disclosure are illustrated by the following detailed description with reference to the accompanying drawings.
FIG. 1A is a schematic perspective view of a secondary battery according to an embodiment.
FIG. 1B is a schematic exploded perspective view of the secondary battery illustrated in FIG. 1A.
FIG. 1C is a schematic internal cross-sectional view of the secondary battery illustrated in FIG. 1A.
FIG. 2A is a schematic perspective view of a side insulator according to an embodiment.
FIG. 2B is a schematic cross-sectional view of the side insulator along line C1-C1' illustrated in FIG. 2A.
FIG. 3A is a schematic perspective view of a side insulator according to another embodiment.
FIG. 3B is a schematic cross-sectional view of the side insulator along line C2-C2' illustrated in FIG. 3A.
FIG. 4A is a schematic perspective view of a side insulator according to another embodiment.
FIG. 4B is a schematic cross-sectional view of the side insulator along line C3-C3' illustrated in FIG. 4A.

### DETAILED DESCRIPTION

Features of the present disclosure disclosed in this patent document are described by example embodiments with reference to the accompanying drawings.

Hereinafter, embodiments will be described with reference to the attached drawings. For convenience, in the following description, detailed descriptions of well-known configurations or technical concepts that are unclear will be omitted.

The following embodiments are provided to more fully explain the present disclosure to those skilled in the art to which the present disclosure pertains. The following embodiments are provided to aid in an understanding of the present disclosure, and the technical idea of the present disclosure is not necessarily limited to the specific embodiments described below. It should be understood that the present disclosure broadly includes various types of equivalents, substitutes, conversions, and the like that implement the technical idea described in the following embodiments.

The terms used in the following embodiments are provided to more fully explain the specific embodiments from the above perspective. Therefore, the terms used in the following embodiments should not be construed as reducing, limiting, or restricting the technical idea of the present disclosure.

In the following description, singular expressions may be interpreted to include the plural unless clearly excluded in context. In addition, the expression "include" in the following description means that the components, parts, operations, features, steps, numbers, and the like in the description exist, and does not mean that the addition of one or more other components, parts, operations, features, steps, numbers, and the like is excluded.

In the following description, the terms "first," "second," and the like may be used to describe specific components to distinguish the components from other components. However, the above terms are used for the purpose of distinguishing specific components from other components for the clarity of the description, and the technical ideas of each component should not be limited by the above terms.

The secondary battery described in this specification may include a rechargeable battery. For example, the secondary battery may include a lead-acid battery, a nickel-cadmium battery, a nickel-hydrogen battery, a lithium-ion battery, and the like. In this description, the case in which the secondary battery is a lithium-ion battery is mainly assumed and explained. In general, lithium-ion batteries may have advantages in terms of lightness, high energy density, low self-discharge rate, and the like. However, it should be understood that the technical concepts described in this specification may be applied to other suitable types of batteries in addition to lithium-ion batteries.

The secondary battery described in this specification may include a single physical unit, or a cluster unit in which multiple of the above units are combined. For example, the secondary battery may include a battery cell, a battery module, a battery pack, and the like according to the classification criteria generally used in the current vehicle field. In this description, the case in which the secondary battery is a battery cell, which is one unit, is mainly assumed and explained. In general, a battery cell is a basic component unit of a battery pack that includes a positive electrode material, a negative electrode material, a separator, an electrolyte, and the like. However, it should be understood that the technical concept described in this specification may be applied to other suitable types of cluster units such as battery modules, battery packs, and the like, as needed.

The secondary battery described in this specification may encompass various packaging types. For example, the secondary battery may be packaged in a cylindrical, prismatic, pouch or coin shape, or the like, according to the classification criteria generally used in the relevant field. This description mainly assumes that the secondary battery is packaged in a prismatic shape. Prismatic packaging, referred to as a prismatic battery or the like may generally have advantages in durability, safety, convenience of installation, and the like. However, it should be understood that the technical concept described in this specification may be applied to other suitable packaging types such as cylindrical, pouch, coin, and the like as needed.

The secondary battery described in this specification may be used in various means that require electric energy. For example, the secondary battery may be suitably used in the field of vehicles that use electric energy as a main or auxiliary power source. As another example, secondary batteries may be suitably used in aircraft fields such as personal aircraft, unmanned aerial vehicles and drones, electronic device fields such as mobile phones, laptops, and tablets, and electric tool fields such as electric drills, electric grinders, and electric hammers. However, it should be understood that the secondary batteries described in this specification may be widely used in various means that operate based on electric energy in addition to the above.

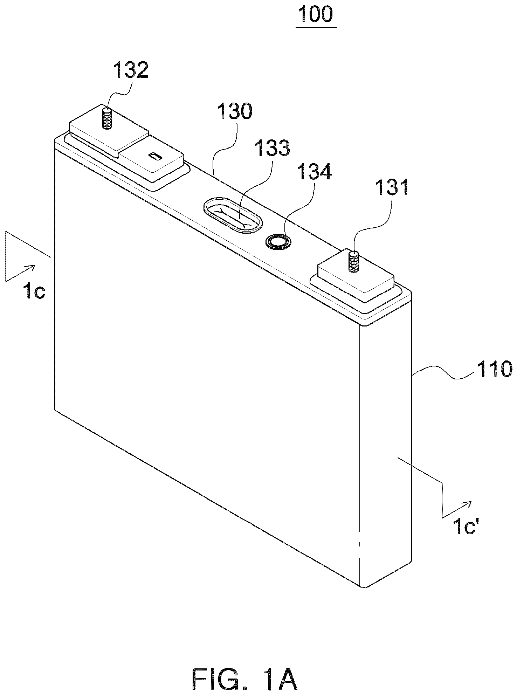

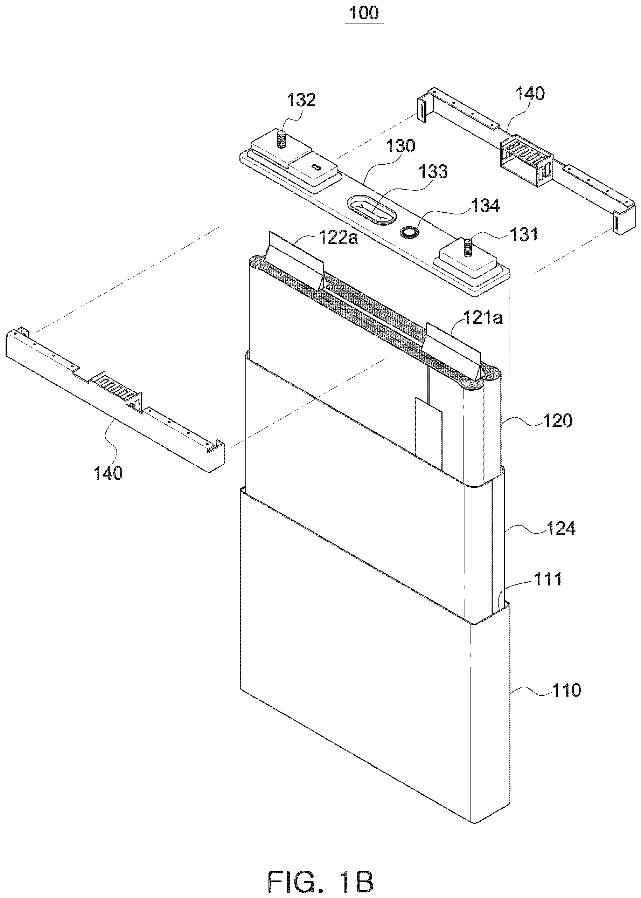

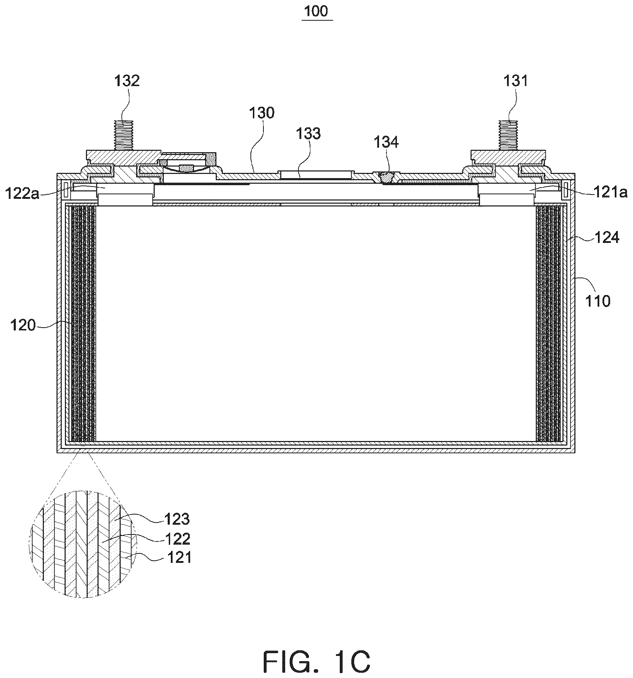

FIG. 1A is a schematic external perspective view of a secondary battery according to an embodiment. FIG. 1B is a schematic exploded perspective view of the secondary battery illustrated in FIG. 1A. FIG. 1C is a schematic internal cross-sectional view of the secondary battery illustrated in FIG. 1A, taken along line 1C-1C' of FIG. 1A.

For convenience of explanation, the present embodiment illustrates one battery cell packaged in a prismatic shape by way of example.

Referring to FIGS. 1A to 1C, a secondary battery 100 according to the present embodiment may include a case 110.

The case 110 may provide an internal space in which an electrode assembly 120 and the like may be accommodated. In the present embodiment, the case 110 is illustrated as having an approximately rectangular parallelepiped shape.

The case 110 may include an opening 111 connected to the internal space. In this embodiment, the opening 111 is illustrated as being provided at the top of the case 110. However, the location of the opening 111 may be changed as needed and is not necessarily limited to the illustrated one. The opening 111 may function as a passage for inserting the electrode assembly 120 and the like. In addition, the opening 111 may function as a connection space for electrical connection between the electrode assembly 120 and the electrode terminal. The opening 111 may be closed by a cap plate 130.

The material of the case 110 may be appropriately selected in consideration of thermal and electrical conductivity, rigidity corresponding to swelling of the electrode assembly 120, processability, manufacturing costs, or the like. For example, the case 110 may be formed of a metal material including aluminum, aluminum alloy, or the like.

On the other hand, the secondary battery 100 according to this embodiment may include the electrode assembly 120.

The electrode assembly 120 may be disposed in the internal space of the case 110. If necessary, the electrode assembly 120 may be accommodated in an insulation bag 124 and placed inside the case 110.

The electrode assembly 120 may include a positive electrode material 121. The positive electrode material 121 may include a positive current collector and a positive electrode active material. In some embodiments, the positive current collector may include aluminum, an aluminum alloy, or the like, and the positive electrode active material may include lithium cobalt oxide, lithium manganese oxide, lithium nickel oxide, lithium iron phosphate, or the like. The positive electrode active material may be coated on the surface of the positive current collector. Some areas of the positive current collector where the positive electrode active material is not coated may function as positive electrode tabs 121a. In some embodiments, a plurality of positive electrode tabs 121a may be provided, and some or all of the plurality of positive electrode tabs 121a may be mutually joined.

The electrode assembly 120 may include a negative electrode material 122. The negative electrode material 122 may include a negative electrode collector and a negative electrode active material. In some embodiments, the negative electrode collector may include copper, a copper alloy, nickel, a nickel alloy, or the like, and the negative electrode active material may include carbon, silicon, or the like. The negative electrode active material may be coated on the surface of the negative electrode collector. Some areas of the negative electrode collector where the negative electrode active material is not coated may function as negative electrode tabs 122a. In some embodiments, a plurality of negative electrode tabs 122a may be provided, and some or all of the plurality of negative electrode tabs 122a may be joined to each other.

The electrode assembly 120 may include a separator 123. The separator 123 may be disposed between the positive electrode material 121 and the negative electrode material 122. The separator 123 may function to limit physical contact between the positive electrode material 121 and the negative electrode material 122 and to provide a passage for the movement of ions. In some embodiments, the separator 123 may be formed of a polymer material including polyethylene, polypropylene, or the like. In addition, the separator 123 may include a dry and wet separator. In some embodiments, the separator 123 may include a coating layer including a ceramic coating layer, or the like.

The electrode assembly 120 may be formed by disposing the above components in a manner such as winding or stacking. For example, the electrode assembly 120 may be formed in a structure in which the positive electrode material 121, the negative electrode material 122, and the separator 123 are wound around a longitudinal or transverse axis. Alternatively, the electrode assembly 120 may be formed in a structure in which the above-mentioned winding structure is compressed in a direction approximately perpendicular to the winding axis. The above-mentioned winding structure may be referred to as a `jelly roll' in the art.

As another example, the electrode assembly 120 may be formed in a structure in which the positive electrode material 121, the negative electrode material 122, and the separator 123 are stacked. In some cases, the separator 123 in the above-mentioned stacked structure may be formed in a structure in which a plurality of unit separators 123 that are continuous in the longitudinal direction are sequentially folded according to the stacking of the positive electrode material 121 and the negative electrode material 122. The above-described stacked structure may be referred to as `stack and folding,' 'z-folding,' or the like in the art. However, in the present embodiment, the arrangement of respective components of the electrode assembly 120 is not particularly limited. The electrode assembly 120 may have various arrangements other than those illustrated above.

In some embodiments, the electrode assembly 120 may be formed by combining multiple units. For example, the electrode assembly 120 may include a unit wound in a jelly roll manner, and two or more of the units may be combined to form the electrode assembly 120. In the present embodiment, the electrode assembly 120 is formed by combining two jelly roll units. As another example, the electrode assembly 120 may include a unit wound in a stack and folding manner, and two or more of the units may be combined to form the electrode assembly 120.

The electrode assembly 120 may be accommodated in the internal space of the case 110 together with the electrolyte. In some embodiments, the electrolyte may be formed of an organic solvent containing a lithium salt. For example, the lithium salt may include lithium hexafluorophosphate (LiPF₆), lithium tetrafluoroborate (LiBF₄), or the like in a liquid or gel phase, and the organic solvent may include cyclic carbonates such as ethylene carbonate (EC) or propylene carbonate (PC), or linear carbonates such as diethyl carbonate (DEC), dimethyl carbonate (DMC) or ethyl methyl carbonate (EMC).

In some other embodiments, the electrolyte may be omitted or replaced. For example, when an inorganic solid electrolyte is used, the liquid or gel electrolyte may be omitted.

On the other hand, the secondary battery 100 according to the present embodiment may include the cap plate 130.

The cap plate 130 may be formed to close the opening 111. In the present embodiment, the cap plate 130 is illustrated as a quadrangular plate shape corresponding to the opening 111. The cap plate 130 may be coupled to the case 110 to seal the internal space of the case 110 in which the electrode assembly 120 is disposed. In some embodiments, the cap plate 130 may be welded to the case 110 by ultrasonic welding, laser welding, or the like.

A positive terminal 131 and a negative terminal 132 may be disposed on the cap plate 130. The positive terminal 131 may be electrically connected to the positive electrode tab 121a of the electrode assembly 120, and the negative terminal 132 may be electrically connected to the negative electrode tab 122a of the electrode assembly 120.

The cap plate 130 may include an electrolyte injection port 134. The electrolyte injection port 134 may be used to inject electrolyte into the internal space of the case 110. In the present embodiment, the electrolyte injection port 134 is positioned adjacent to a vent 133 in the central area of the cap plate 130. However, the position of the electrolyte injection port 134 may be variously changed and is not necessarily limited to the example. The electrolyte injection port 134 may be appropriately sealed after the electrolyte injection, the formation process, or the like. In some embodiments, the electrolyte injection port 134 may be sealed by pressing a ball-shaped sealing member formed of a polymer resin.

The cap plate 130 may include the vent 133. In the present embodiment, the vent 133 is disposed between the positive terminal 131 and the negative terminal 132. However, the position of the vent 133 may be changed in various ways as needed and is not necessarily limited to the example. In some other embodiments, the vent 133 may be disposed in or added to the case 110. The vent 133 may be formed to open in response to the internal pressure of the case 110. The vent 133 may function to discharge the internal pressure to the outside of the case 110 and contribute to stabilizing the internal elements of the case 110.

On the other hand, the secondary battery 100 according to the present embodiment may include a side insulator 140.

In the present embodiment, the side insulator 140 may be disposed on a side of a lower portion of the cap plate 130. The side insulator 140 may secure an appropriate gap between the cap plate 130 and the electrode assembly 120, and may function to secure an additional insulation structure at the connection portion of the electrode tabs 121a and 122a. In addition, the side insulator 140 may also function as a means of protecting the vent 133. The detailed function of the side insulator 140 will be described in detail later.

In the present embodiment, the side insulator 140 may be divided and formed as a pair. The divided side insulators 140 may be connected to each other with the cap plate 130 interposed therebetween. As a result, the side portion of the lower portion of the cap plate 130 may be covered by the side insulator 140. On the other hand, the side insulator 140 may be installed to be coupled to the top of the insulation bag 124 and to be inserted into the inside of the case 110.

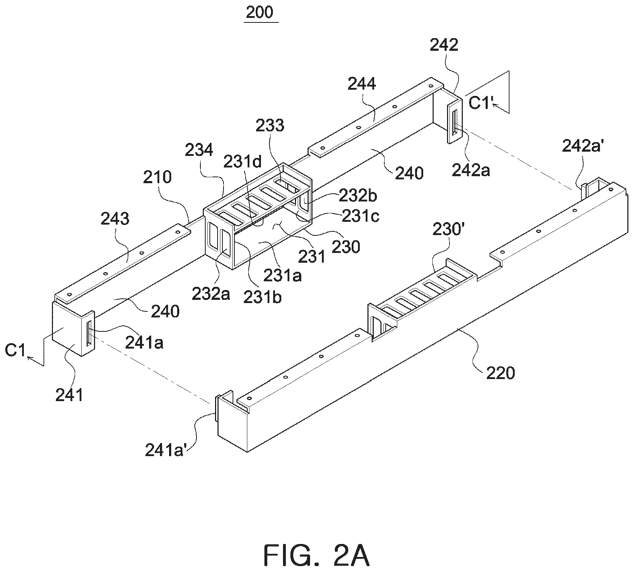

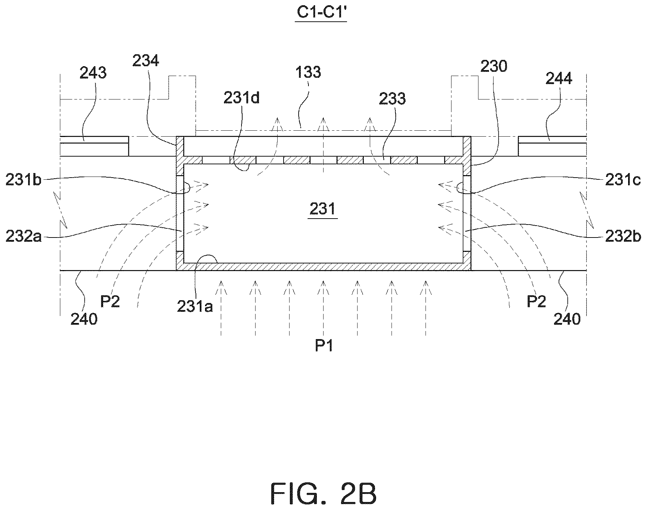

FIG. 2A is a schematic perspective view of a side insulator according to an embodiment. FIG. 2B is a schematic cross-sectional view of the side insulator along the C1-C1' line illustrated in FIG. 2A.

For convenience, new drawing symbols are assigned to the side insulators according to each embodiment and are described below.

Referring to FIGS. 2A and 2B, a side insulator 200 of an embodiment may be divided and formed as a pair of parts. For example, the side insulator 200 of the present embodiment may be divided into a first side insulator 210 and a second side insulator 220. The first and second side insulators 210 and 220 formed as parts may provide convenience in terms of assembly.

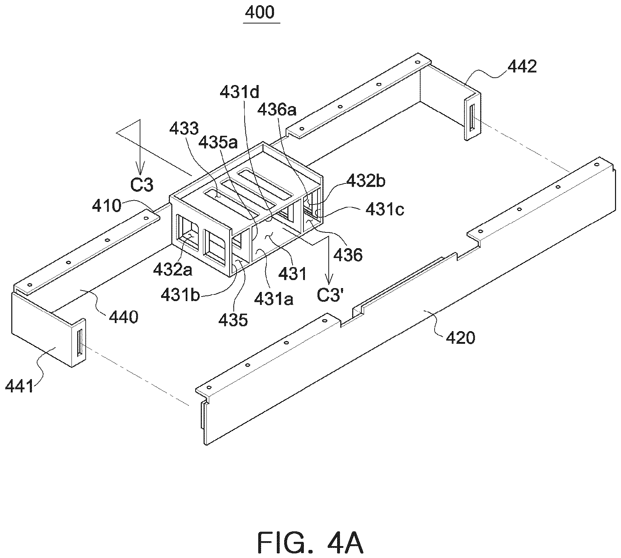

However, the side insulator 200 of the present disclosure is not necessarily limited to the above-mentioned split form. The side insulator 200 may be formed as one unit or divided into three or more parts, depending on the need. In addition, the side insulator 200 may be formed by dividing into a plurality of parts with a division shape other than the illustrated shape. For example, the side insulator 200 may be formed by dividing into parts with mutually asymmetrical division shapes. For reference, FIG. 4A and the like, which will be described later, illustrate one case in which the first side insulator 410 and the second side insulator 420 are formed by dividing into different shapes, by way of example.

In this embodiment, the first and second side insulators 210 and 220 are formed to be identical or similar to each other, and thus, for convenience, the following description will focus on the first side insulator 210.

On the other hand, the side insulator 200 of this embodiment may include a vent cover portion 230.

The vent cover portion 230 may be placed below the vent 133. For example, the position of the vent cover portion 230 may be set so that it covers the lower part of the vent 133 when the side insulator 200 is fastened to the cap plate 130. In this embodiment, the vent 133 is disposed approximately at the left and right center of the cap plate 130, and correspondingly thereto, the vent cover portion 230 may be disposed at the left and right center of the side insulator 200 as an example.

When explaining with the first side insulator 210 as the center, the vent cover portion 230 may be equipped with a main chamber 231. In this embodiment, the main chamber 231 is formed partly in the first side insulator 210 and the remaining part thereof may be formed in the second side insulator 220, to be partitioned from the outside by the combination of the first and second side insulators 210 and 220.

The vent cover portion 230 may include a lower surface 231a that partitions the lower region of the main chamber 231. In this embodiment, the lower surface 231a of the vent cover portion 230 may be formed as a closed surface. The closed lower surface 231a may function to prevent pressure or by-products inside the case 110 from directly flowing into the main chamber 231. For example, the closed lower surface 231a may function to protect the vent 133 from temporary pressure changes, high-temperature by-products, or the like. For reference, in this embodiment, the pressure inside the case 110 and the like may be applied to the vent 133 through first and second sides 231b and 231c described later.

On the other hand, the vent cover portion 230 may include the first and second sides 231b and 231c that divide the left and right areas of the main chamber 231. A first inflow hole 232a may be formed in the first side 231b, and a second inflow hole 232b may be formed in the second side 231c. The first and second inflow holes 232a and 232b are formed penetrating the first and second sides 231b and 231c, respectively, to provide a circulation path into and out of the main chamber 231 through the first and second sides 231b and 231c. In the case of the present embodiment, the first inflow hole 232a has a slit shape extending vertically and is formed penetrating the first side 231b, and a plurality of first inflow holes 232a are spaced apart from each other along the first side 231b. Similarly, the second inflow hole 232b has a slit shape extending vertically and is formed penetrating the second side 231c, and a plurality of second inflow holes 232b are spaced apart from each other along the second side 231c. However, the shape, number, and the like of the first and second inflow holes 232a and 232b may be changed as needed and are not necessarily limited to those illustrated.

On the other hand, the vent cover portion 230 may include an upper surface 231d that partitions the upper region of the main chamber 231. In the present embodiment, the main chamber 231 is illustrated as having a space having a substantially rectangular shape, including the lower surface 231a, the first and second sides 231b and 231c, and the upper surface 231d. An exhaust hole 233 may be formed in the upper surface 231d. The exhaust hole 233 may be formed penetrating the upper surface 231d to provide a circulation path into and out of the main chamber 231 through the upper surface 231d. In the present embodiment, the exhaust hole 233 has a slit shape extending forward and backward and is formed penetrating the upper surface 231d, and a plurality of exhaust holes are spaced apart along the upper surface 231d. However, the shape, number, and the like of the exhaust hole 233 may be changed as needed, and are not necessarily limited to the examples.

If needed, a sealing flange 234 may be provided on an edge of the upper surface 231d of the vent cover portion 230. The sealing flange 234 may be formed to protrude a predetermined height from the edge of the upper surface 231d toward the cap plate 130. In addition, the sealing flange 234 may be formed to extend along the edge of the upper surface 231d. In the present embodiment, a portion of the sealing flange 234 is formed on the vent cover portion 230 formed on the first side insulator 210, and the remaining part is formed on the vent cover portion 230' formed on the second side insulator 220. The sealing flange 234 may be extended in the form of a closed shape that includes the upper surface 231d area of the vent cover portion 230 or the exhaust hole 233 therein. In the present embodiment, the sealing flange 234 is formed by combining a portion formed on the first side insulator 210 and the remaining portion formed on the second side insulator 220, and is extended in the shape of a closed quadrangle that includes the upper surface 231d area of the vent cover portion 230 inside.

The sealing flange 234 may partition the flow path between the exhaust hole 233 and the vent 133 from the outside thereof. As a result, the pressure and the like applied to the exhaust hole 233 may be appropriately transmitted to the vent 133. However, in the present embodiment, the sealing flange 234 is not required to be completely sealed from the outside. The sealing flange 234 may be provided as long as it provides a path through which the pressure of the main chamber 231 or the like may be appropriately transmitted to the vent 133.

On the other hand, the side insulator 200 of the present embodiment may include an assembly bracket 240.

In the present embodiment, the assembly bracket 240 may be provided on each of the first and second side insulators 210 and 220. When explaining with the first side insulator 210 as the center, the assembly bracket 240 may be formed to extend to a predetermined length in the left and right directions, and the vent cover portion 230 may be disposed approximately in the center of the assembly bracket 240. The assembly bracket 240 may be formed to extend to the left and right directions with a length substantially corresponding to the cap plate 130. In the present embodiment, the assembly bracket 240 is illustrated as a bar or beam shape having a predetermined width in the vertical direction. However, the detailed shape of the assembly bracket 240 may be changed as needed, and is not necessarily limited to the example.

A first bending portion 241 may be formed on one end of the assembly bracket 240 in the longitudinal direction. The first bending portion 241 may be formed by bending an end area of the assembly bracket 240 toward the second side insulator 220. A first coupling portion 241a may be provided at an end of the first bending portion 241. The first coupling portion 241a may be coupled to a first coupling portion 241a' of the corresponding second side insulator 220, thereby coupling the first and second side insulators 210 and 220. In this embodiment, the first coupling portion 241a of the first side insulator 210 is illustrated as a connecting hole of a predetermined shape, and the first coupling portion 241a' of the corresponding second side insulator 220 is illustrated as a connecting protrusion corresponding to the connecting hole. However, the illustrated connecting form, method, and the like may be changed as needed, and are not necessarily limited to the illustrated ones.

On the other hand, a second bending portion 242 may be formed on the other end of the assembly bracket 240, which is opposite to the first bending portion 241. The second bending portion 242 may be formed by bending the opposite end area of the assembly bracket 240 toward the second side insulator 220. A second coupling portion 242a may be provided at the end of the second bending portion 242. The second coupling portion 242a may be coupled to a second coupling portion 242a' of the corresponding second side insulator 220 to couple the first and second side insulators 210 and 220. In the present embodiment, the second coupling portion 242a is illustrated as having a coupling structure similar to the coupling structure of the first coupling portion 241a. However, the illustrated coupling form, method, and the like may be changed as needed, and are not necessarily limited to what is illustrated.

On the other hand, first and second assembly ribs 243 and 244 may be formed on the upper end of the assembly bracket 240. The first assembly rib 243 may be formed to extend a predetermined length in the longitudinal direction of the assembly bracket 240 in one area of the assembly bracket 240 centered on the vent cover portion 230. In addition, the second assembly rib 244 may be formed to extend a predetermined length in the longitudinal direction of the assembly bracket 240 in the opposite area corresponding to the one area. The first and second assembly ribs 243 and 244 may be used to connect the side insulator 200 and the cap plate 130 and to reinforce the rigidity of the assembly bracket 240 extended in the longitudinal direction.

On the other hand, in the present embodiment, the second side insulator 220 may be formed identically or similarly to the first side insulator 210 as described above. The second side insulator 220 may have a symmetrical shape with the first side insulator 210 and may be mutually connected with the first side insulator 210 to form a single side insulator 200 that covers the side of a lower portion of the cap plate 130.

On the other hand, the side insulator 200 as described above may be formed partly or entirely of an insulating material. Also, the side insulator 200 may be formed partly or entirely of an elastic material as needed. The above elastic material may contribute to improving the sealing performance inside the case 110. For example, the side insulator 200 may be formed partly or entirely of nitrile rubber (NBR), fluoro rubber (FKM), ethylene propylene rubber (EPDM), chloroprene rubber (CR), or the like.

Referring to FIG. 2B, the side insulator 200 of the present embodiment may be combined with the cap plate 130 so that the vent cover portion 230 is disposed below the vent 133. The vent 133 may be disposed in the inner area of the flat sealing flange 234. In this state, the side insulator 200 may function to protect the vent 133 from temporary pressure changes inside the case 110, high-temperature byproducts or the like. For example, the pressure P1 and the like applied to the lower surface 231a of the vent cover portion 230 is appropriately restricted from being directly applied to the main chamber 231 by the closed lower surface 231a, and thus, the vent 133 may be protected from temporary pressure changes, and the like. In addition, the elastic deformation of the lower surface 231a and the internal space of the main chamber 231 may function as a buffer means or buffer space that buffers the temporary pressure changes as described above.

On the other hand, pressure P2 inside the case 110 may be applied to the main chamber 231 through the first and second sides 231b and 231c. In detail, the pressure P2 inside the case 110 may be applied to the main chamber 231 through the first inflow hole 232a formed in the first side 231b and the second inflow hole 232b formed in the second side 231c, and the pressure P2 applied to the main chamber 231 may be applied to the vent 133 on the upper side through the exhaust hole 233 formed in the upper surface 231d of the main chamber 231. The vent 133 may be appropriately broken at a predetermined pressure by the action of the pressure thus rectified.

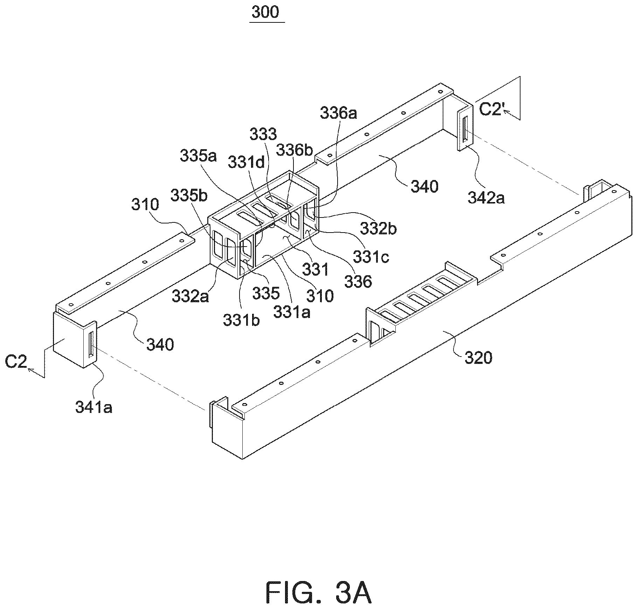

In some cases, the main chamber 231 may function as a means to prevent pressure, by-products, and the like flowing back from the vent 133 from flowing into the inside of the case 110. For example, if the vent 133 is unintentionally ruptured by high-temperature by-products or the like flowing back from an adjacent cell, the pressure, by-products, or the like flowing back from the ruptured vent 133 are primarily received in the main chamber 231, so that the inflow into the case 110 may be partially restricted. The closed lower surface 231a of the vent cover portion 230 may restrict the pressure, by-products, or the like from directly flowing into the electrode assembly 120. In addition, the pressure, by-products, or the like received in the main chamber 231 may be discharged in a limited manner through the first and second inflow holes 232a and 232b. For reference, in the following FIG. 3A or the like, buffer chambers 335 and 336 may be added to further limit the backflow of pressure, by-products, or the like.

The side insulator 200 as described above may appropriately limit temporary pressure changes and the like from directly acting on the vent 133 through the lower surface 231a of the vent cover portion 230. In addition, the vent cover portion 230 may be formed to transfer the pressure introduced into the first and second side (231b, 231c) areas to the vent 133 through the main chamber 231. In this case, the main chamber 231 may function as a kind of buffering means or buffer space to implement more accurate pressure transfer to the vent 133.

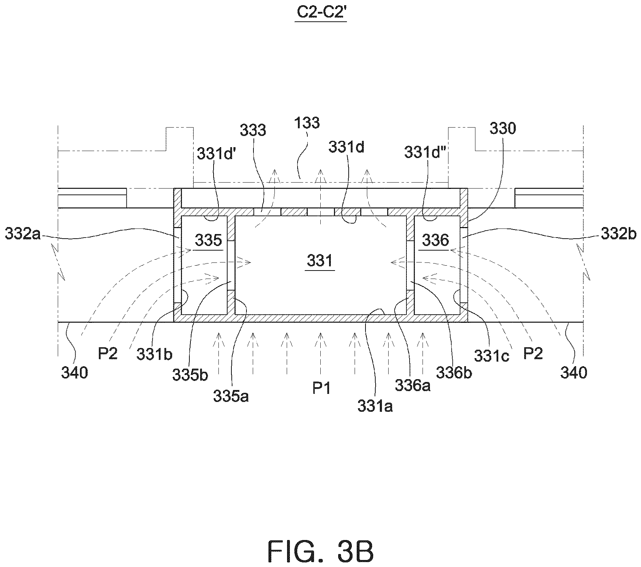

FIG. 3A is a schematic perspective view of a side insulator according to another embodiment. FIG. 3B is a schematic cross-sectional view of the side insulator along the C2-C2' line illustrated in FIG. 3A.

For convenience, the following embodiments will be described with a focus on differences from the aforementioned embodiments.

Referring to FIGS. 3A and 3B, a side insulator 300 according to an embodiment may be formed by dividing into first and second side insulators 310 and 320. The first and second side insulators 310 and 320 may have symmetrical shapes and may be formed identically or similarly to each other. This is generally similar to the aforementioned embodiments.

On the other hand, the side insulator 300 of the present embodiment may include a vent cover portion 330.

The vent cover portion 330 may be disposed below a vent 133. Similar to the above-described embodiment, the pressure inside the case 110 may be transmitted to the vent 133 through the vent cover portion 330.

The vent cover portion 330 may include a lower surface 331a, first and second sides 331b and 331c, and an upper surface 331d. The lower surface 331a, the first and second sides 331b and 331c, and the upper surface 331d may partition a predetermined space from the outside thereof. The lower surface 331a may be formed as a closed surface, and may function to protect the vent 133 from temporary pressure changes inside the case 110 or high-temperature byproducts. A first inflow hole 332a may be formed in the first side 331b, and a second inflow hole 332b may be formed in the second side 331c. In addition, an exhaust hole 333 may be formed in the upper surface 331d. The pressure inside the case 110 or the like may be transmitted to the vent 133 through the first and second inflow holes 332a and 332b and the exhaust hole 333. This is generally similar to the above-described embodiment.

On the other hand, the vent cover portion 330 of the present embodiment may include a main chamber 331 and buffer chambers 335 and 336.

The vent cover portion 330 of the present embodiment may have some differences from the above-described embodiment in that the buffer chambers 335 and 336 are added. The buffer chambers 335 and 336 may be formed by partially partitioning the internal space of the vent cover portion 330 from the main chamber 331. In the present embodiment, the buffer chambers 335 and 336 may be partitioned into a space that is generally smaller than the main chamber 331.

If necessary, a plurality of buffer chambers 335 and 336 may be provided. In the present embodiment, a pair of buffer chambers 335 and 336 are provided on the left and right sides of the main chamber 331. For convenience, respective buffer chambers 335 and 336 will be referred to as a first buffer chamber 335 and a second buffer chamber 336, respectively, hereinafter. Therefore, the first and second buffer chambers 335 and 336 may be partitioned left and right with the main chamber 331 therebetween.

The first buffer chamber 335 is disposed on one side (left side in the drawing) of the main chamber 331 and may be partitioned from the main chamber 331 by a first internal partition 335a. The first internal partition 335a may have a first buffer hole 335b formed to connect the first buffer chamber 335 and the main chamber 331. As described above, a first inflow hole 332a is formed in the first side 331b facing the first internal partition 335a to connect the inside of the case 110 and the first buffer chamber 335.

The first buffer chamber 335 may be connected to the main chamber 331 through the first buffer hole 335b. In the area where the first buffer chamber 335 is partitioned, the exhaust hole 333 of the upper surface 331d may be appropriately omitted. For example, unlike the main chamber 331 described below, the first buffer chamber 335 may include the upper surface 331d'formed as a closed surface. Accordingly, the pressure or the like inside the case 110 may be transferred to the first buffer chamber 335 through the first inflow hole 332a, and transferred back to the main chamber 331 through the first buffer hole 335b.

The first buffer chamber 335 may be partitioned into a smaller space than the main chamber 331. For example, the first buffer chamber 335 may be partitioned into a space having a volume of 10 to 30% of the main chamber 331.

In addition, the first buffer hole 335b may be formed smaller than the first inflow hole 332a. For example, the total opening area of the first buffer hole 335b may be formed to be a predetermined amount smaller than the total opening area of the first inflow hole 332a. In this embodiment, the first buffer hole 335b is illustrated as having a width corresponding to a width of the first inflow hole 332a, but having a height that is slightly smaller than a height of the first inflow hole 332a.

The first buffer chamber 335 may function to partially accommodate temporary pressure fluctuations and transmit the rectified pressure to the main chamber 331 through the area difference between the first buffer hole 335b and the first inflow hole 332a as described above. In addition, the area difference between the first buffer hole 335b and the first inflow hole 332a may function to limit pressure, byproducts, or the like from flowing back into the case 110 from the main chamber 331.

On the other hand, the second buffer chamber 336 may be disposed on the opposite side (right side in the drawing) of the first buffer chamber 335 with the main chamber 331 therebetween. The second buffer chamber 336 may be formed generally similarly to the first buffer chamber 335 described above. For example, the second buffer chamber 336 may be partitioned from the main chamber 331 by a second internal partition 336a, and a second buffer hole 336b may be formed in the second internal partition 336a. In addition, the second buffer chamber 336 may include the upper surface 331d" formed as a closed surface, and the second buffer hole 336b may be formed smaller than the second inflow hole 332b.

The vent cover portion 330 of the present embodiment is provided with the first and second buffer chambers 335 and 336 added thereto as described above, so that the pressure or the like inside the case 110 may be transmitted to the main chamber 331 through the first and second buffer chambers 335 and 336. The first and second buffer chambers 335 and 336 are provided with the first and second buffer holes 335b and 336b formed to be a predetermined size smaller than the first and second inflow holes 332a and 332b, and may rectify the pressure or the like applied to the first and second inflow holes 332a and 332b to a predetermined degree and transmit the rectified pressure or the like to the main chamber 331. In addition, the first and second buffer chambers 335 and 336 may have a function of partially limiting the backflow of pressure, by-products, or the like in the event of an unintended rupture of the vent 133.

On the other hand, the side insulator 300 of the present embodiment may include an assembly bracket 340.

The assembly bracket 340 may be provided on each of the first and second side insulators 310 and 320, and may be formed to extend a predetermined length to the left and right with the vent cover portion 330 as the center. The first and second coupling portions 341a and 342a are formed at respective ends of the assembly bracket 340, thereby being connected to the corresponding second side insulator 320. In the present embodiment, the assembly bracket 340 may be formed substantially similarly to that in the above-described embodiment.

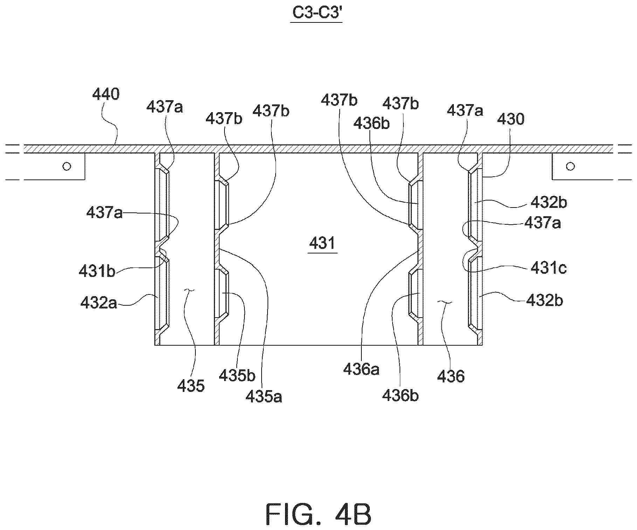

FIG. 4A is a schematic perspective view of a side insulator according to another embodiment. FIG. 4B is a schematic cross-sectional view of the side insulator along the C3-C3' line illustrated in FIG. 4A.

Referring to FIGS. 4A and 4B, a side insulator 400 of the present embodiment may be formed by dividing into first and second side insulators 410 and 420. In contrast to the embodiments described above, the side insulator 400 of the present embodiment may be formed by dividing into the first and second side insulators 410 and 420 so that they have slightly different shapes. In the present embodiment, most of the components may be disposed in the first side insulator 410, and the second side insulator 420 may only partially perform the function of an assembly bracket.

On the other hand, the first side insulator 410 of the present embodiment may include a vent cover portion 430.

The vent cover portion 430 may be formed to be disposed below the vent 133 to limit the pressure inside the case 110 from being directly transmitted to the vent 133. In contrast to the embodiments described above, the vent cover portion 430 of this embodiment is substantially disposed on the first side insulator 410, and the second side insulator 420 may only partially perform the function of the assembly bracket.

The vent cover portion 430 may include a lower surface 431a, first and second sides 431b and 431c, and an upper surface 431d, and the lower surface 431a may be formed as a closed surface to protect the vent 133 from temporary pressure changes inside the case 110, high-temperature byproducts, and the like. In addition, first and second inflow holes 432a and 432b may be formed in the first and second sides 431b and 431c, respectively, and an exhaust hole 433 may be formed in the upper surface 431d. The pressure inside the case 110 or the like may be transmitted to the vent 133 through the first and second inflow holes 432a and 432b and the exhaust hole 433.

In addition, the vent cover portion 430 may include a main chamber 431 and buffer chambers 435 and 436. Similar to the above-described embodiment, the buffer chambers 435 and 436 may include first and second buffer chambers 435 and 436, and the first and second buffer chambers 435 and 436 may be partitioned from the main chamber 431 by first and second internal partitions 435a and 436a, respectively. In addition, the first and second buffer chambers 435 and 436 may be formed with first and second buffer holes 435b and 436b, respectively, and the first and second buffer holes 435b and 436b may be formed to be a predetermined degree smaller than the first and second inflow holes 432a and 432b, respectively. In the present embodiment, the first and second buffer holes 435b and 436b are illustrated as having heights corresponding to heights of the first and second inflow holes 432a and 432b, but having widths that are slightly smaller than widths of the first and second inflow holes 432a and 432b.

On the other hand, in the present embodiment, first flaps 437a may be formed around the first and second inflow holes 432a and 432b. The first flaps 437a may be formed to extend a predetermined length from the edge portions of the first and second inflow holes 432a and 432b toward the inside of the main chamber 431. In addition, the first flaps 437a may be formed to extend obliquely to a predetermined angle toward the centers of the first and second inflow holes 432a and 432b. In the present embodiment, the first flaps 437a are formed as a pair to extend obliquely from the edge portions of the first and second inflow holes 432a and 432b.

Similarly to the above, second flaps 437b may be formed around the first and second buffer holes 435b and 436b. The second flaps 437b may be formed to extend a predetermined length from the edge portions of the first and second buffer holes 435b and 436b toward the inside of the main chamber 431, and may be formed to extend obliquely to a predetermined degree toward the centers of the first and second buffer holes 435b and 436b. In the present embodiment, the second flaps 437b are formed as a pair to extend obliquely from the edge portions of the first and second buffer holes 435b and 436b.

The first and second flaps 437a and 437b as described above assist in smoothly transmitting the pressure or the like inside the case 110 to the first and second buffer chambers 435 and 436 or the main chamber 431. In addition, the first and second flaps 437a and 437b enable more effectively limiting the pressure, by-products, or the like flowing back into the case 110 from the main chamber 431 in the event of an unintended rupture of the vent 133.

On the other hand, in this embodiment, the case in which the first and second flaps 437a and 437b are provided in both the first and second inflow holes 432a and 432b and the first and second buffer holes 435b and 436b is illustrated. However, if necessary, the first and second flaps 437a and 437b may be provided in only some of the first and second inflow holes 432a and 432b and the first and second buffer holes 435b and 436b. For example, in some embodiments, the first flap 437a may be omitted, and the second flap 437b may be provided in only the first and second buffer holes 435b and 436b. As another example, only some of the first and second inflow holes 432a and 432b among the plurality of first and second inflow holes 432a and 432b may be selectively provided with the first flap 437a, or only some of the first and second buffer holes 435b and 436b among the plurality of first and second buffer holes 435b and 436b may be selectively provided with the second flap 437b.

On the other hand, the side insulator 400 of the present embodiment may include an assembly bracket 440.

The assembly bracket 440 may be provided on each of the first and second side insulators 410 and 420, and may be formed to extend a predetermined length to the left and right with the vent cover portion 430 as the center. In the present embodiment, the first and second bending portions 441 and 442 are formed relatively long on the assembly bracket 440 disposed on the first side insulator 410 to correspond to the vent cover portion 430 disposed on the first side insulator 410.

As described above, the secondary battery according to some embodiments may include a side insulator disposed on the lower side of the cap plate. The side insulator may include a vent cover portion disposed on the lower side of the vent, and the vent cover portion may function to protect the vent from temporary pressure changes or high-temperature byproducts. In addition, the vent cover portion may include an inflow hole on the side and an exhaust hole disposed toward the vent, and may rectify the pressure inside the case and transmit the rectified pressure to the vent. The main chamber provided in the vent cover portion may function as a buffering means or buffer space that buffers temporary pressure changes, and in some embodiments, a buffer chamber may be added to further enhance the above function and effect.

Only specific examples of implementations of certain embodiments are described. Variations, improvements and enhancements of the disclosed embodiments and other embodiments may be made based on the disclosure of this patent document.

## Claims

1. A secondary battery comprising:
a case accommodating an electrode assembly therein;
a cap plate including a vent and sealing an opening of the case; and
a side insulator disposed on a lower portion of the cap plate,
wherein the side insulator includes,
a vent cover portion including a main chamber and disposed below the vent; and
an assembly bracket on which the vent cover portion is disposed.

2. The secondary battery of claim 1, wherein the vent cover portion includes a lower surface partitioning a lower region of the main chamber,
wherein the lower surface is formed as a closed surface and limits pressure inside of the case from directly acting on the main chamber through the lower surface.

3. The secondary battery of any one of preceding claims, wherein the vent cover portion includes a first side and a second side partitioning left and right regions of the main chamber,
wherein the first side includes a first inflow hole transferring pressure inside of the case to the main chamber, and
the second side includes a second inflow hole transferring the pressure inside of the case to the main chamber.

4. The secondary battery of any one of preceding claims, wherein the vent cover portion includes an upper surface partitioning an upper region of the main chamber,
wherein the upper surface includes a penetrating exhaust hole toward the vent.

5. The secondary battery of any one of claim 1 to 3, wherein the vent cover portion includes,
an upper surface including an exhaust hole penetrating toward the vent and partitioning an upper region of the main chamber, and
a sealing flange protruding from the upper surface toward the cap plate by a predetermined height and extending along an edge of the upper surface to include the exhaust hole of the vent cover portion thereinside.

6. The secondary battery of any one of preceding claims, wherein the vent cover portion includes a first buffer chamber partitioned from the main chamber by a first internal partition.

7. The secondary battery of claim 6, wherein the first buffer chamber is divided into a space that is smaller than the main chamber by a predetermined amount.

8. The secondary battery of claim 6 or 7, wherein the first buffer chamber is connected to an interior of the case through a first inflow hole provided in a first side of the vent cover portion, and is connected to the main chamber through a first buffer hole provided in the first internal partition.

9. The secondary battery of claim 8, wherein the first buffer hole is configured to have an opening area smaller than an opening area of the first inflow hole by a predetermined amount.

10. The secondary battery of any one of claim 6 to 9, wherein the first buffer chamber includes an upper surface formed as a closed surface, and
the main chamber includes an exhaust hole penetrating through an upper surface toward the vent.

11. The secondary battery of claim 8 or 9, wherein the first inflow hole includes a first flap extending by a predetermined length from a side edge portion of the first inflow hole toward the main chamber,
wherein the first flap is configured to extend obliquely toward a center of the first inflow hole.

12. The secondary battery of any one of claim 6 to 11, wherein the vent cover portion includes a second buffer chamber partitioned from the main chamber by a second internal partition and disposed to correspond to the first buffer chamber with the main chamber interposed therebetween.

13. The secondary battery of any one of preceding claims, wherein the side insulator includes,
a first side insulator including a portion of the vent cover portion; and
a second side insulator including a remaining portion of the vent cover portion.

14. The secondary battery of any one of preceding claims, wherein the assembly bracket is configured to extend in a longitudinal direction in such a manner that the vent cover portion is disposed at the center in the longitudinal direction.

15. The secondary battery of claim 14, wherein the assembly bracket includes,
a first bending portion including a first coupling portion and provided on one end in the longitudinal direction;
a second bending portion including a second coupling portion and provided on an end corresponding and opposite to the one end;
a first assembly rib provided in one-side region of the assembly bracket centered on the vent cover portion, extending by a predetermined length in the longitudinal direction, and coupled to the cap plate; and
a second assembly rib provided in a region opposite to the one-side region, extending by a predetermined length in the longitudinal direction, and coupled to the cap plate.
